(19) Europäisches Patentamt

European Patent Office

Office européen des brevets

(11) Numéro de publication: **0 280 631 B1**

(12) **FASCICULE DE BREVET EUROPEEN**

(45) Date de publication de fascicule du brevet: **12.05.93** (51) Int. Cl.5: **F02P 3/045**, F02P 5/155

(21) Numéro de dépôt: **88420067.6**

(22) Date de dépôt: **24.02.88**

(54) **Dispositif d'allumage automobile.**

(30) Priorité: **26.02.87 FR 8702550**

(43) Date de publication de la demande:
**31.08.88 Bulletin 88/35**

(45) Mention de la délivrance du brevet:
**12.05.93 Bulletin 93/19**

(84) Etats contractants désignés:
**AT BE CH DE ES FR GB IT LI NL SE**

(56) Documents cités:
**GB-A- 1 400 722**
**US-A- 3 605 713**
**US-A- 4 043 302**
**US-A- 4 552 118**

**PATENT ABSTRACTS OF JAPAN, vol. 11, no. 46 (E-479)[2493], 12 février 1987; & JP-A-61 210 606 (NIPPON DENSO CO. LTD) 18-09-1986**

(73) Titulaire: **SGS-THOMSON MICROELECTRO-NICS S.A.**
**101 Boulevard Murat**
**F-75016 Paris(FR)**

(72) Inventeur: **Lusinchi, Jean-Pierre**
**13, Rue de l'Ancienne Ferme**
**F-38120 Saint Egreve(FR)**
Inventeur: **Moreau, Jean-Michel**
**4 Rue Louis Lachenal**
**F-38000 Grenoble(FR)**

(74) Mandataire: **de Beaumont, Michel et al**
**1bis, rue Champollion**
**F-38000 Grenoble (FR)**

**Description**

La présente invention concerne des systèmes d'allumage pour véhicules automobiles à moteur à explosion.

Dans un moteur à explosion, il convient de produire une étincelle à une certaine phase du cycle d'un piston, aux environs du point mort haut (PMH) de la course du piston. Cette étincelle est réalisée en interrompant brutalement le passage du courant dans une bobine qui a été préalablement chargée. Ainsi, au cours de chaque cycle du piston, il faut prévoir deux repères temporels, un premier repère correspondant à la fermeture du circuit de charge et un deuxième correspondant à son ouverture. La durée de charge de la bobine pour obtenir une valeur suffisante au moment où l'on établit la rupture est pratiquement constante mais, par contre, la durée d'un cycle du moteur dépend bien évidemment de la vitesse de rotation de celui-ci. Il est souhaitable que la durée prévue entre les deux repères temporels susmentionnés soit suffisante pour permettre une charge suffisante de la bobine mais ne soit pas trop élevée pour ne pas entraîner une surconsommation d'énergie et un échauffement des composants.

On va rappeler ci-dessous les modes de fonctionnement des principaux systèmes existant et montrer à l'aide de quelques ordres de grandeur pratiques quels sont les objectifs que l'on peut raisonnablement chercher à atteindre.

Le système le plus ancien est le système à rupteur mécanique. Le primaire d'une bobine élévatrice est alimenté par la batterie du véhicule ; le rupteur est capable d'y établir ou d'y interrompre le passage du courant, selon qu'il est laissé fermé ou maintenu ouvert par une came solidaire d'un arbre entraîné par le moteur. La séquence qui aboutit à la production d'une étincelle prend place, en première analyse, pendant le demi-tour du moteur correspondant à la phase de compression et se terminant par l'étincelle, qui coïncide à peu près avec le passage du piston par le "point mort haut". Pour cette raison, il est commode de repérer les événements par l'angle de rotation du moteur avec lequel ils coïncident.

Ainsi, dans un allumage classique à rupteur, la came, entraînée par l'axe moteur, laisse celui-ci se fermer sous l'action d'un ressort de rappel, pour un certain angle de rotation qu'on appelle couramment "angle de dwell". Le courant passe alors dans le primaire de la bobine. Au voisinage du point mort haut, la came soulève le rupteur et l'interruption brusque du courant produit au secondaire une haute tension capable de produire une étincelle d'allumage. Il s'agit donc d'un système commandé pour un angle constant du moteur.

Toutefois, ce système mécanique présente divers inconvénients liés notamment à l'usure du rupteur et de la came.

Ainsi, on tend actuellement à remplacer les allumages mécaniques par des allumages électroniques dans lesquels le rupteur est remplacé par un commutateur électronique de puissance ce qui élimine les phénomènes liés à l'usure. Il faut alors prévoir un détecteur et des moyens pour déterminer les instants de fermeture et d'ouverture du circuit de bobine.

Parmi les détecteurs actuellement utilisés, les plus simples et les moins coûteux, tels que les capteurs à effet Hall ou les détecteurs de proximité à courant de Foucault, fournissent une seule information précise par cycle, correspondant sensiblement au point d'ouverture du circuit de bobine, c'est-à-dire au point mort haut. Il faut alors calculer, à partir de l'instant où l'ouverture du circuit a été effectuée, l'instant auquel on devra effectuer la fermeture suivante pour obtenir une charge satisfaisante de la bobine.

D'autres détecteurs sont des capteurs optiques qui permettent de fournir des informations sur des positions en rotation successives du moteur. Toutefois, ces détecteurs sont coûteux en eux-mêmes et, pour être utilisés avantageusement, doivent être associés à des systèmes de calcul à microprocesseur.

L'un des détecteurs actuellement le plus utilisé est un capteur à réluctance variable dont le fonctionnement sera exposé plus en détail ci-après mais dont il faut retenir, que pour les phases transitoires de fonctionnement du moteur, il ne fournit avec sécurité qu'une information relative au passage par le point mort haut.

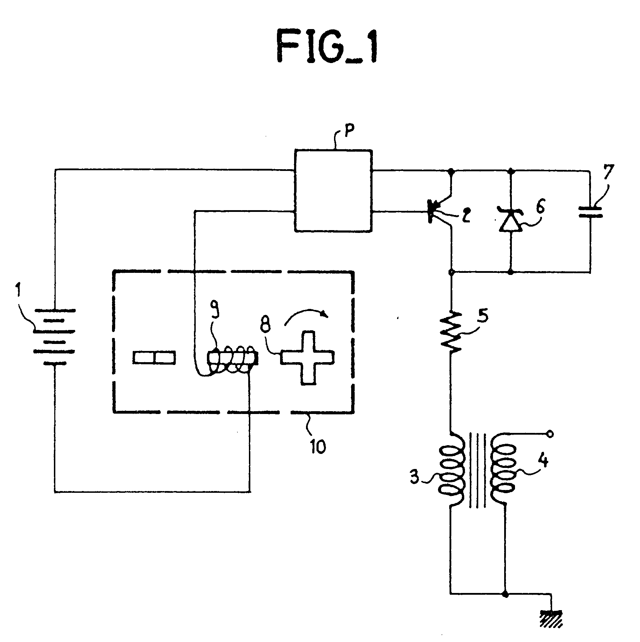

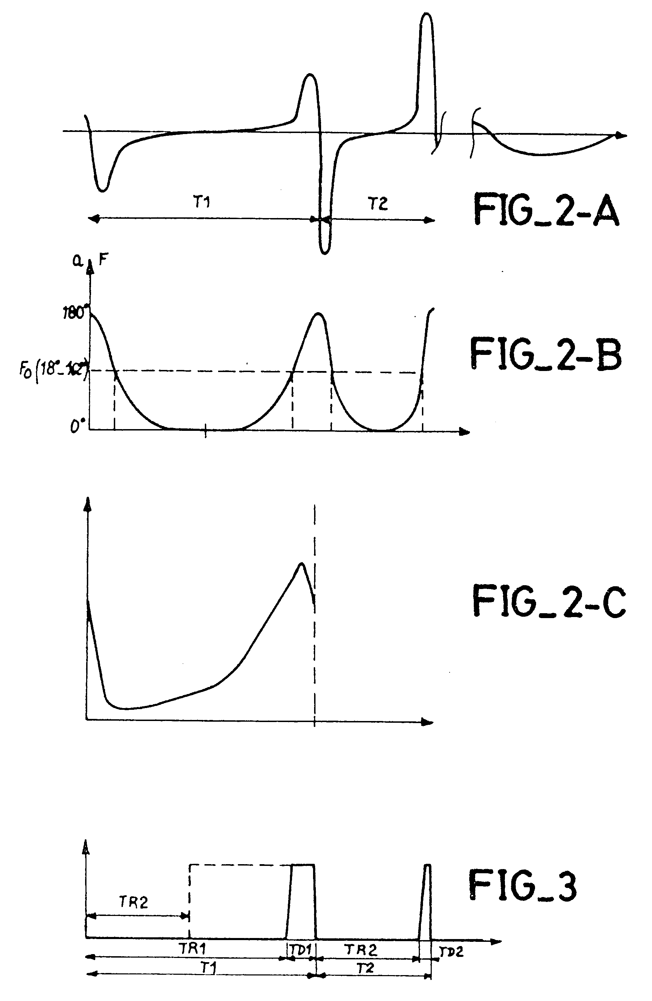

La figure 1 représente de façon très schématique un circuit d'allumage électronique utilisant un capteur à réluctance variable. Le circuit de la figure 1 représente la batterie du véhicule 1 alimentant un transistor de commutation 2 destiné à commander le passage du courant dans le primaire d'une bobine 3 dont le secondaire 4 est connecté à un système de distributeur. On a également représenté dans la figure des moyens élémentaires de protection de surintensité et de surtension comprenant une résistance 5, une diode Zener 6 et un condensateur 7. La commande du transistor 2 est assurée par un capteur à réluctance variable 10 suivi d'un circuit de mise en forme d'impulsions P. Le capteur à réluctance variable comprend un élément tournant 8 à une ou plusieurs dents solidaire d'une pièce en rotation du moteur. Un enroulement 9 produit une tension quand la réluctance du circuit magnétique qui lui est associé varie. En particulier, on voit en figure 2A que cette tension passe rapidement d'une valeur positive à une valeur négative quand une dent de l'élément tournant 8 se rapproche puis s'éloigne du circuit magnétique associé à la bobine. Quand le moteur se trouve dans un régime transitoire, c'est-à-dire en accélération ou en décélération rapide, c'est pratiquement la seule information que l'on peut extraire avec certitude du signal du capteur à réluctance variable.

La figure 2A représente l'allure du signal de sortie d'un capteur à réluctance variable pendant deux cycles successifs de durée T1 et T2, le cycle T2 étant deux fois plus court que le cycle T1, c'est-à-dire le moteur étant en pleine accélération. On a supposé pour simplifier que l'accélération se produisait de façon instantanée entre les deux cycles et que la vitesse était constante au cours d'un cycle mais il est bien clair qu'en pratique le phénomène est beaucoup plus complexe. Même sans tenir compte de cette complexité, le fait qu'on puisse avoir des accélérations très rapides d'un cycle à l'autre ne permet pas d'optimiser la durée de fermeture du circuit de charge. En effet, à partir du moment où l'on dispose d'une seule information par cycle, on ne peut commander la fermeture du circuit de charge que par un retard prédéterminé par rapport à l'instant d'ouverture précédent. On va montrer ci-dessous, en relation avec des ordres de grandeur pratiques que, au moins pour certaines plages de fonctionnement, cette deuxième solution présente des inconvénients.

Les moteurs à explosion courants ont des vitesses qui peuvent varier par exemple entre 30 tours par minute et 6000 tours par minute. Le tableau ci-dessous indique, pour chaque vitesse de moteur en tours par minute, l'intervalle entre étincelles en millisecondes et l'angle de charge correspondant en considérant que le circuit de charge de la bobine nécessite une durée de 3 millisecondes pour que l'on obtienne une charge satisfaisante, que l'on produit deux étincelles par tour, que le capteur comporte quatre dents et qu'il tourne deux fois moins vite que le moteur qui est un moteur à quatre cylindres et à quatre temps.

| VITESSE MOTEUR (tours/minute) | INT. ENTRE ETINCELLES (ms) | ANGLE DE CHARGE |
|---|---|---|
| 30 | 1000 | 0,5° |
| 600 | 50 | 11° |
| 1000 | 33,3 | 18° |
| 6000 | 5 | 108° |

La figure 3 représente les résultats que l'on obtient selon que l'on fait une commande en temps de retard par rapport à une ouverture précédente ou que l'on fait une commande par détection d'angle. On a considéré dans cette figure 3 deux périodes successives T1 et T2, correspondant par exemple à une vitesse de 500 tours par seconde et à une vitesse de 1000 tours par seconde. Il s'agit là d'un cas pratique qui peut survenir car, dans l'intervalle 30 tours-1000 tours de la vitesse du moteur, il peut se produire des accélérations très rapides d'un cycle à l'autre. Pendant la période T2, on veut que la durée de charge TD2 soit de 3 ms. Comme l'indique le tableau précédent, ceci correspond à un angle de charge de 18°. On désigne par TR2 le retard entre la rupture précédente et le début de la fermeture (début de la période de charge). Pour la période T1 précédente, si l'on dispose d'une information d'angle de charge, également calée à 18°, on obtiendra un début de charge après un retard TR1 et une durée de charge TD1, l'angle de charge étant toujours de 18°, c'est-à-dire que le rapport cyclique de fonctionnement sera toujours environ 1/10 et donc que la consommation d'énergie sera faible. Par contre, si l'on n'est pas en mesure de détecter cet angle de 18°, on sera obligé d'imposer le même retard TR2 après la rupture immédiatement précédente et, pendant le cycle T1, on aura une durée de charge correspondant au tracé en pointillés, c'est-à-dire un rapport cyclique supérieur 50 %. Le premier cas (angle de charge constant) est celui que l'on obtenait classiquement avec des systèmes mécaniques à came et rupteur et, c'est également le cas où l'on peut se trouver avec des systèmes de détection d'angle complexe optique. Le deuxième cas (retard constant) est celui dans lequel on se trouve normalement quand on dispose d'un capteur donnant seulement l'information du point mort haut.

Dans les systèmes électroniques utilisant un capteur à réluctance variable, on a essayé d'utiliser divers procédés d'asservissement, permettant à partir de la courbe de la figure 2A d'obtenir des informations supplémentaires pour effectuer des prévisions sur les durées de conduction pour la période suivante. Ces systèmes fonctionnent de façon satisfaisante en régime établi et lentement variable mais ne donnent pas satisfaction quand on se trouve dans des cas d'accélération ou de décélération brutale telle qu'énoncés précédemment à moins, une fois encore, d'avoir recours à des systèmes d'analyse extrêmement complexes à microprocesseur (même dans ce cas il s'avère que, s'il se produit des accélérations et des décélérations à l'intérieur d'une période, ce qui est un cas courant, on n'obtient pas de détermination satisfaisante du temps de fermeture). Ainsi, on arrive soit à des temps de fermeture trop longs en période de décélération soit à des temps de fermeture trop courts en période d'accélération, c'est–àdire que pour certains cycles du moteur l'étincelle ne se produit pas. Ce phénomène, absence d'étincelle, qui était tolérable avec les automobiles classiques devient totalement inacceptable à partir du moment où l'on associe au moteur du véhicule un pot d'échappement catalytique. En effet, les catalyseurs du pot d'échappement sont très rapidement dégradés s'ils reçoivent des gaz d'échappement n'ayant pas subi de combustion ou ayant subi une combustion incomplète.

L'une des bases de la présente invention réside dans la prise de conscience du fait que, pour les périodes transitoires du moteur, l'un des systèmes les plus fiables et les plus simples est encore l'ancien système mécanique à détection de deux valeurs d'angle de rotation. Mais ce système est toutefois écarté pour les inconvénients liés à l'usure mécanique qu'il présente et du fait qu'il ne fournit pas de signal électronique commode à traiter pour d'autres raisons, par exemple dans le cadre d'un système d'avance à l'allumage.

Ainsi, un objet de la présente invention est de prévoir un système électronique capteur particulièrement simple et économique permettant de fournir une commande par angle de rotation constant.

Pour atteindre cet objet ainsi que d'autres, la présente invention prévoit un dispositif d'allumage électronique pour la commande d'un moteur dans une gamme de vitesses où ce moteur est susceptible d'accélérations brutales, utilisant un détecteur à réluctance variable fournissant un signal de sortie dont une transition brutale est utilisée pour déterminer l'instant d'ouverture du circuit de charge, dans lequel on fixe l'instant de fermeture du circuit de charge de la bobine du moteur à un angle de rotation donné du moteur choisi en fonction de la vitesse la plus rapide dans ladite gamme, comprenant :

- un intégrateur fournissant un signal intégré à partir dudit signal de sortie ; et
- un comparateur comparant ledit signal intégré à une tension de référence et fournissant le signal de fermeture.

La présente invention sera exposée plus en détail dans la description détaillée suivante d'un mode de réalisation particulier faite en relation avec les figures jointes parmi lesquelles :

la figure 1 représente un système d'allumage électronique ;

les figures 2A, 2B et 2C représentent des courbes utiles à l'exposé du fonctionnement d'un système de l'art antérieur et d'un système selon la présente invention ;

la figure 3 représente des courants de charge en fonction du temps pour des cycles successifs de fonctionnement d'un moteur ;

la figure 4 représente un mode de réalisation schématique d'un dispositif selon la présente invention ; et

la figure 5 représente une variante de réalisation d'un dispositif selon la présente invention.

La présente invention fait utilisation d'un capteur à réluctance variable tel que le capteur classique schématisé en figure 1 mais, au lieu d'utiliser directement le signal du capteur, l'intégrale de ce signal est utilisée. Il existe une relation constante entre cette intégrale et l'angle du moteur ou plus précisément de la pièce magnétique mobile. En effet, la tension e aux bornes du capteur est donnée par :

$$e = -dF/dt,$$

et :

$$\int e\, dt = F \text{ à une constante près.}$$

Le flux F qui traverse l'enroulement du capteur ne dépend que de l'angle de rotation de la pièce magnétique mobile et de sa forme; ainsi l'intégrale de edt est une fonction bien définie de l'angle de rotation. Donc si, comme le représente la figure 2B, on fixe un seuil $F_0$, correspondant par exemple à un angle de 18 ou de 162°, pour chaque passage de la fonction F par ce seuil $F_0$, on connait l'angle auquel on se trouve. Il est donc possible par ce moyen de réaliser une commande en angle constant de façon simple, sans prévoir de circuit électronique complexe incorporant des microprocesseurs. La figure 2B est présentée en relation avec les figures 2A et 3 précédemment décrites pour bien montrer les avantages de l'invention qui permet de fonctionner comme avec une came mécanique. C'est pourquoi on pourra appeler ce système "système à came électronique".

Ce système est particulièrement avantageux dans le cas où, même pour la valeur la plus courte du cycle, c'est−à−dire la plus grande vitesse du moteur, l'angle de charge reste relativement faible, par exemple inférieur à 45˚. En effet, on est alors dans une zone de la courbe F où la pente est raide et où, en conséquence, pour une tension de référence donnée, la mesure est relativement précise.

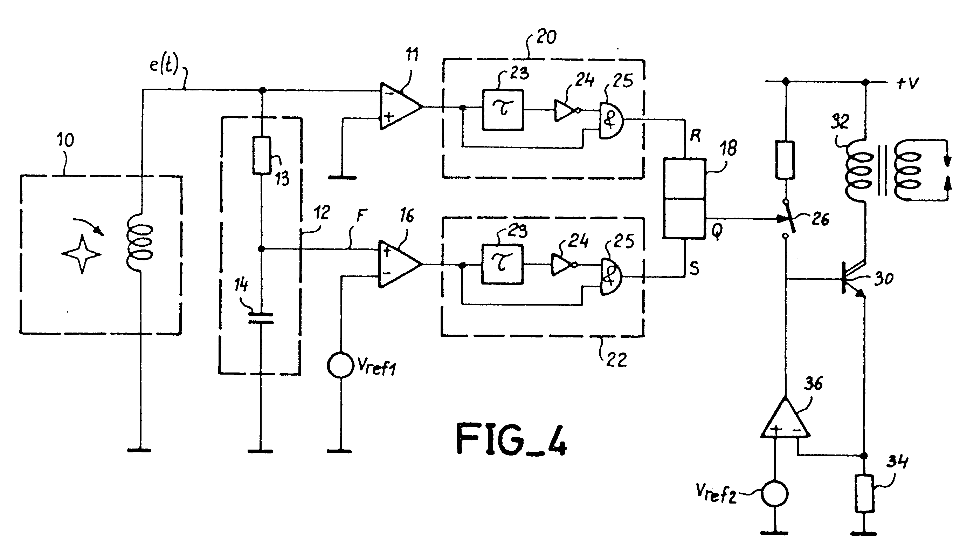

La figure 4 représente un mode de réalisation de la présente invention. Le capteur à réluctance variable 10 fournit un signal e(t) qui est connecté, d'une part, directement à un comparateur 11 dont la deuxième entrée est connectée à la masse de façon à détecter les passages par 0 du signal e(t) et, d'autre part, à une entrée d'un intégrateur 12 constitué par exemple tout simplement d'une résistance 13 et d'un condensateur 14. Cet intégrateur peut également comprendre de façon classique un amplificateur différentiel à rebouclage entre l'entrée et la sortie par un condensateur. La tension intégrée F de sortie de l'intégrateur 12 est appliquée à la première entrée d'un comparateur 16 dont la deuxième entrée reçoit une tension de référence $V_{ref}1$. Ainsi, le premier comparateur 11 détecte les passages par 0 de la tension e(t) et le deuxième comparateur détecte en fonction de la valeur de $V_{ref}1$ les passages par un angle déterminé.

Les sorties des comparateurs 11 et 16 sont respectivement envoyées aux entrées de remise à 0, R, et de mise à 1, S, d'une bascule RS 18. Auparavant, ces entrées peuvent être traitées par des circuits de mise en forme 20 et 22 permettant de fournir des impulsions de commande de durée brève et des déclenchements seulement sur des fronts montants des signaux e et F. Ces circuits de mise en forme peuvent par exemple comprendre un circuit de retard 23 (fixant la durée d'une impulsion de commande) suivi d'un inverseur 24 connecté à la première entrée d'une porte ET 25 dont la deuxième entrée reçoit la sortie directe du comparateur. La sortie de la bascule RS 18 est connectée à l'entrée de commande d'un interrupteur commandé 26, par exemple un circuit à transistors. Cet interrupteur détermine la mise en conduction d'un transistor de puissance ou autre interrupteur principal 30 relié en série avec la bobine 32 du moteur. Pour éviter que des intensités excessives circulent dans la bobine après une certaine durée de charge, l'intensité dans le circuit de charge comprenant la bobine 32 et le transistor de puissance 30 est détectée par une résistance de mesure 34. La tension aux bornes de cette résistance est comparée dans un comparateur 36 à une tension de référence $V_{ref}2$ de façon à limiter le courant quand la valeur critique est atteinte.

Ainsi, un circuit selon la présente invention est tout particulièrement adapté au cas où l'angle de charge, même pour la vitesse la plus rapide, reste modéré. Avec l'exemple numérique mentionné précédemment, on notera que c'est le cas par exemple entre des vitesses de 30 tours et de 1000 tours du moteur. Au delà d'une vitesse du moteur de 1000 tours, les angles de charge requis deviennent relativement importants, par exemple de l'ordre de 108˚ pour une vitesse de 6000 tours. Ceci correspond à un rapport cyclique supérieur à 50 % pour le courant de charge. Il n'est alors plus souhaitable de faire un dispositif d'allumage à angle de charge constant. On pourra, grâce à une détection de vitesse appropriée, dés que l'on dépasse cette vitesse de 1000 tours, commuter le système selon la présente invention sur un système classique à asservissement qui fonctionne bien dans cette plage de vitesse, étant donné que, dans la plage des vitesses élevées, il n'apparaît plus d'accélération très importante d'un cycle au suivant ; la différence de vitesse d'un cycle à l'autre est en pratique tout au plus de 10 % au delà de 1000 tours par minute.

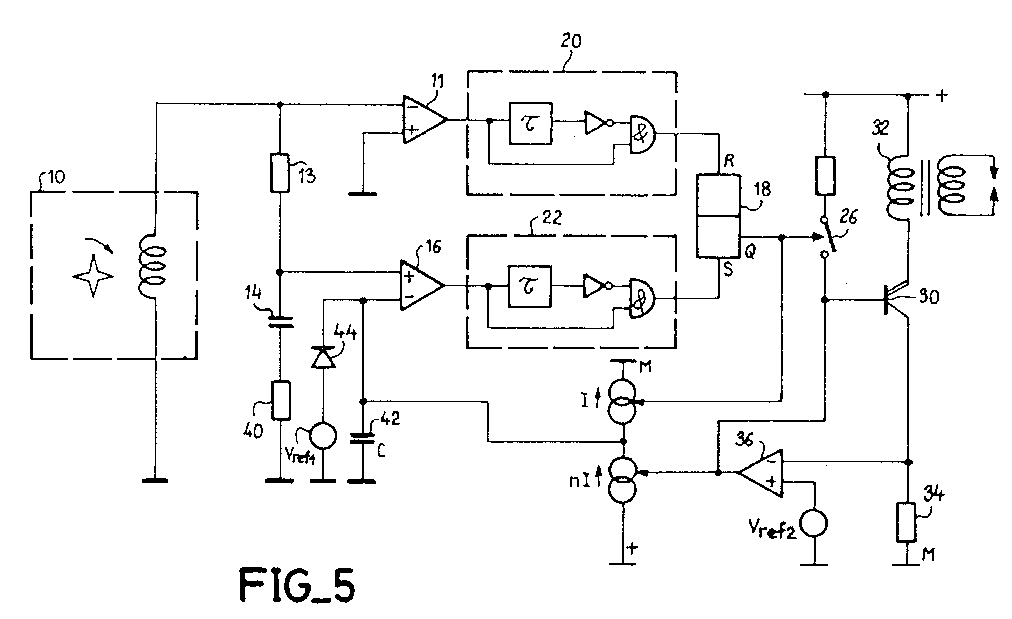

Au lieu de recourir à l'ajout d'un circuit classique, on pourra aussi modifier le système selon l'invention pour prévoir un asservissement actif seulement dans la plage des vitesses élevées. Un tel asservissement est représenté schématiquement en figure 5. Dans cette figure, de mêmes références représentent de mêmes éléments qu'en figure 4. Deux modifications distinctes ont été apportées au circuit de la figure 4 : d'une part, la tension appliquée à la première entrée du comparateur 16 n'est plus strictement le signal intégré F, d'autre part, la tension de référence $V_{ref}1$ appliquée à ce comparateur 16 n'est plus une tension fixe.

Selon la première modification, une résistance 40 est ajoutée en série avec le condensateur 14. La résistance 40 sert à ajouter au signal F une certaine proportion r du signal e(t), cette proportion croissant quand la fréquence augmente et les valeurs des impédances 13, 14 et 40 étant choisies pour que l'amplitude maximale du signal F et l'amplitude maximale du signal e(t) soient du même ordre de grandeur pour la vitesse de rotation la plus élevée du moteur.

Par suite de cette addition de e à F, on obtient un signal qui a l'allure représentée en figure 2C et qui permet des détections de niveaux même pour des durées de charge importantes. En effet, comme on l'a vu ci−dessus, quand la vitesse du moteur augmente, il est nécessaire d'augmenter l'angle de charge (108˚ pour 6000 tours/minute dans l'exemple précédent). Si l'on fixe un seuil pour un front montant sur la courbe F, on ne peut dépasser 90˚. De plus, entre 45 et 90˚, on est très peu précis, la courbe F étant alors presque plate. La courbe de la figure 2C permet de résoudre ces problèmes. Un autre avantage de cet ajout de e à F est que, s'il se produit une brusque accélération, la fraction de e ajoutée provoque une augmentation instantanée de l'angle de dwell qui est utile dans un tel cas.

5

Selon la seconde modification, un condensateur 42, connecté entre la deuxième entrée du comparateur 16 et la masse, est en parallèle avec la source de tension de référence $V_{ref}1$ en série avec laquelle est insérée une diode 44. Ce condensateur 42 est déchargé par une source de courant I quand la sortie de la bascule RS 18 est active. Il est chargé par une source de courant nI quand la sortie du comparateur 36 est active. Il est maintenu flottant pendant le reste du cycle.

Le fonctionnement de l'asservissement est le suivant. Le condensateur 42 est déchargé par le courant I pendant tout le temps où la bobine se charge jusqu'à sa valeur maximale (temps de dwell). Il se charge ensuite par un courant nI pendant le temps supplémentaire de fermeture du circuit de charge à courant constant imposé par la résistance 34 et le comparateur 36, ce deuxième temps étant appelé temps de régulation. Ce temps de régulation sert de temps de sécurité et doit être choisi pour que la somme du temps de dwell et du temps de régulation d'un cycle soit telle que, pour un cycle suivant, en phase d'accélération brutale, le même angle de charge laisse un temps de dwell suffisant. L'asservissement décrit précédemment assure que le temps de régulation et le temps de dwell sont dans un rapport $1/n - 1$. Il conviendra de choisir la valeur de n pour satisfaire aux contraintes du moteur à explosion commandé.

Le maintien de la tension de référence $V_{ref}1$ assure que l'asservissement ne joue qu'au delà d'un certain seuil, c'est – àdire que l'on ne peut descendre en deçà d'un angle de charge minimal fixé par $V_{ref}1$ qui reste constant aux basses vitesses.

## Revendications

1. Dispositif d'allumage électronique pour la commande d'un moteur dans une gamme de vitesses où ce moteur est susceptible d'accélérations brutales, utilisant un détecteur de rotation du moteur à réluc – tance variable (10) fournissant un signal de sortie (e(t)) dont une transition brutale est utilisée pour déterminer l'instant d'ouverture du circuit de charge de la bobine d'allumage du moteur, dans lequel l'instant de fermeture dudit circuit de charge est fixé à un angle de rotation donné du moteur choisi en fonction de la vitesse la plus rapide dans ladite gamme, caractérisé en ce qu'il comprend :
   – un intégrateur (12) fournissant un signal intégré (F) à partir dudit signal de sortie ; et
   – un comparateur (16) comparant ledit signal intégré à une tension de référence ($V_{ref}1$) et fournissant le signal de fermeture (S).

2. Dispositif d'allumage électronique selon la revendication 1, caractérisé en ce que la tension de référence est une tension fixe.

3. Dispositif d' allumage électronique selon la revendication 1, caractérisé en ce que le signal d'ouverture du circuit de charge est fourni directement à partir du signal de sortie (e(t)) du détecteur à réluctance variable (10).

4. Dispositif d'allumage électronique selon la revendication 1, caractérisé en ce que l'intégrateur (12) est du type à résistance – capacité.

5. Dispositif d'allumage électronique selon la revendication 1, caractérisé en ce que le comparateur (16) reçoit en plus du signal intégré (F) une certaine proportion dudit signal de sortie (e(t)).

6. Dispositif d' allumage électronique selon la revendication 1, caractérisé en ce qu'il comprend des moyens pour que l'amplitude de ladite tension de référence dépende de la durée de fermeture précédente du circuit de charge, mais ne puisse monter au – delà d'un seuil prédéterminé.

## Claims

1. An electronic ignition device for the control of an engine in a speed range where this engine is liable to present abrupt accelerations, using a variable reluctance detector of the motor rotation (10) providing an output signal (e(t)), an abrupt transition of which is used for determining the opening time of the circuit for charging the engine coil, wherein the closing time of the charging circuit is fixed at a given engine rotation angle chosen as a function of the quickest speed in said range, characterized in this that it comprises :
   – an integrator (12) providing an integrated signal (F) from said output signal ; and
   – a comparator (16) comparing said integrated signal with a reference voltage ($V_{ref}1$) and providing the closing signal (S).

**2.** An electronic ignition device according to claim 1, characterized in this that the reference voltage is a fixed voltage.

**3.** An electronic ignition device according to claim 1, characterized in this that the charging circuit opening signal is directly provided from the output signal (e(t)) of the variable reluctance detector (10).

**4.** An electronic ignition device according to claim 1, characterized in this that said integrator (12) of the resistor – capacitor type.

**5.** An electronic ignition device according to claim 1, characterized in this that the comparator (16) receives in addition to the integrated signal (F) a given ratio of said output signal (e(t)).

**6.** An electronic ignition device according to claim 1, characterized in this that it comprises means such that the magnitude of said reference voltage is dependant upon the former closing time duration of the charging circuit, said amplitude being limited to a predetermined threshold.

**Patentansprüche**

**1.** Elektronische Zündanlage für die Steuerung eines Motors in einem Geschwindigkeitsbereich, in dem der Motor für starke Beschleunigungen empfindlich ist, mit einem Detektor für die Drehung des Motors mit variabler Reluktanz, der ein Ausgangssignal (e(t)) abgibt, dessen starke Änderung verwendet wird, um den Öffnungszeitpunkt der Ladeschaltung der Zündspule des Motors zu bestimmen, wobei der Schließzeitpunkt der Ladeschaltung bei einem gegebenen Drehwinkel des Motors festgelegt ist, der als Funktion der schnellsten Geschwindigkeit in dem besagten Bereich gewählt ist, dadurch gekennzeich – net, daß die Zündanlage aufweist:
  – einen Integrator (12), der ein integriertes Signal (F) ausgehend von dem Ausgangssignal liefert; und
  – einen Komparator (16), der dieses integrierte Signal mit einer Referenzspannung ($V_{ref}1$) vergleicht und das Schließsignal (S) liefert.

**2.** Elektronische Zündanlage nach Anspruch 1, dadurch gekennzeichnet, daß die Referenzspannung eine feste Spannung ist.

**3.** Elektronische Zündanlage nach Anspruch 1, dadurch gekennzeichnet, daß das Öffnungssignal der Ladeschaltung direkt ausgehend von dem Ausgangssignal (e(t)) des Detektors mit variabler Reluktanz (10) geliefert wird.

**4.** Elektronische Zündanlage nach Anspruch 1, dadurch gekennzeichnet, daß der Integrator (12) von dem Widerstands – Kapazitätstyp ist.

**5.** Elektronische Zündanlage nach Anspruch 1, dadurch gekennzeichnet, daß der Komparator (16) zu – sätzlich zum integrierten Signal (F) einen gewissen Anteil des Ausgangssignales (e(t)) empfängt.

**6.** Elektronische Zündanlage nach Anspruch 1, dadurch gekennzeichnet, daß sie Mittel aufweist, damit die Amplitude der Referenzspannung von der Zeitdauer des vorhergehenden Schließens der Ladeschaltung abhängt, jedoch nicht eine vorbestimmte Schwelle überschreiten kann.

# FIG_1

FIG_2-A

T1    T2

FIG_2-B

$a$  $F$

180°

$F_0$ (18° 162°)

0°

FIG_2-C

FIG_3

TR2

TR1    TD1    TR2    TD2

T1    T2

FIG_4

FIG_5